# EUROPEAN PATENT SPECIFICATION

(11) **EP 1 933 027 B1**
(45) Date of publication and mention of the grant of the patent: **16.03.2011**
(21) Application number: 06125678.0
(22) Date of filing: 08.12.2006
(51) Int. Cl.: F03D 1/00, F03D 1/06, F03D 11/00

(54) **Hub for the rotor of a wind turbine**
Nabe für Windturbinenrotor
Moyeu de rotor pour turbine éolienne

(43) Date of publication of application: 18.06.2008
(73) Proprietor: STX Heavy Industries Co., Ltd., Changwon-si Gyeongsangnam-do 641-371 (KR)
(72) Inventor: de Vilder, Gerardus Johannes, 3434 DP Nieuwegein (NL)
(74) Representative: Caspary, Karsten

(56) References cited:
- EP-A- 1 286 048
- EP-A- 1 596 064
- WO-A-03/064854
- WO-A-2004/090326
- DE-U1-202004 003 521

## Description

The invention concerns a hub for the rotor of a wind turbine in accordance with the preamble of claim 1. Such a hub is known from the publications WO03064854 or EP-A-1596064. The disadvantage of the known hub is that the wall thickness of the hollow body and/or the second flanges must be considerable as otherwise the second flanges have not sufficient stiffness for properly supporting the vane bearings. The aim of the invention is to reduce the weight of the hub and/or to reduce its deformations. In order to obtain this aim the hub is in accordance with claim 1. By reinforcing the reinforcement ring with a cylindrical stiffener rim it is possible with only a little additional material to reduce the wall thickness of the hollow body, the second flange and/or the reinforcement ring.

In this way, the reinforcement ring is sufficiently stiffened.

In accordance with an embodiment, the hub is according to claim 2. In this way, the second flange is sufficiently reinforced whereby the inside of the vane remains accessible.

In accordance with an embodiment, the hub is according to claim 3. In this way, it is easier to cast the hollow body in a sufficient high quality.

In accordance with an embodiment, the hub is according to claim 4. In this way, the drive is properly mounted while it remains accessible.

In accordance with an embodiment, the hub is according to claim 5. In this way the hollow body has a shape that is stiff while it overall dimensions remain as small as feasible.

Hereafter the invention is explained with the aid of an embodiment using a drawing. In the drawing
Figure 1 shows a side view of a wind turbine with a rotor rotating around a horizontal axis and having vanes attached to a hub,
Figure 2 shows a frontal view of the hub of the wind turbine of figure 1,
Figure 3 show a side view of the hub of figure 2, seen from the direction of a vane,
Figure 4 shows a vertical cross section IV-IV of the hub of figure 3, and
Figure 5 shows a horizontal cross section V-V of the hub of figure 3.

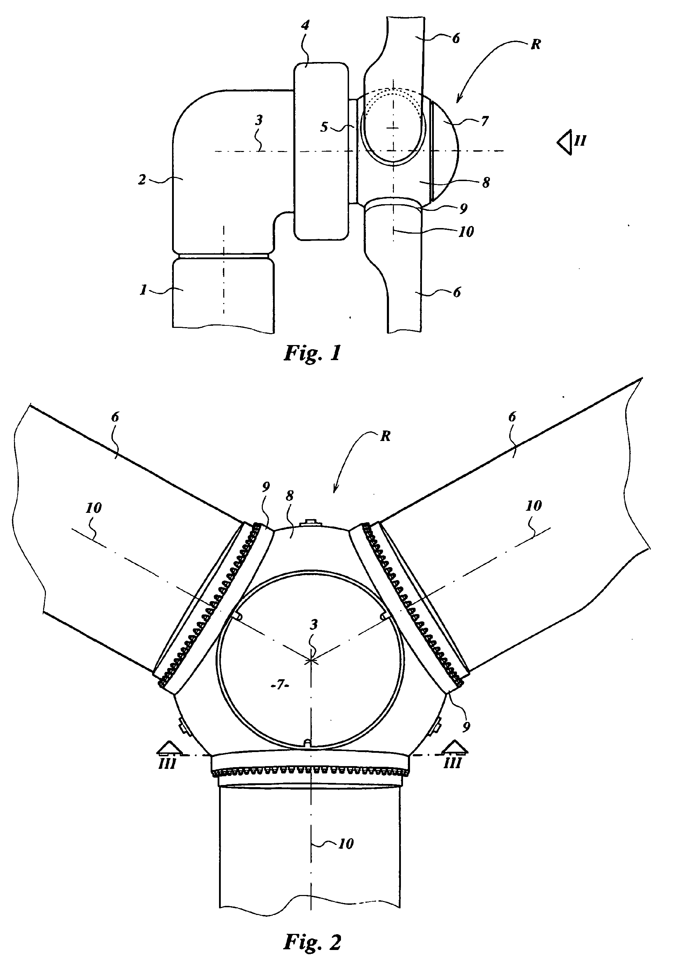

Figure 1 shows a tower 1 on which a housing 2 is rotatable around a vertical axis. The housing 2 has a generator 4 for generating electrical power. A main bearing 5 is attached to the housing 2 and a rotor R is attached to the main bearing 5 so that the rotor R can rotate around a rotor rotation axis 3.The rotor R has a hub 8 to which three vane bearings 9 are mounted. Vanes 6 are each attached to a vane bearing 9 and can rotate around a vane rotation axis 10, At the front side the hub is covered with a cap 7 for giving it a streamlined design.

Figure 2 shows the hub 8 of the rotor R seen from the front with the vane bearings 9. The vanes 6, shown in this view in interrupted lines, exert a force on the vane bearing 9 and so on the hub 8 and the hub 8 transmits the forces generated by the vanes 6 as a torque transmitted via the main bearing 5 to the generator 4. The hub 8 is of a hollow design and the vanes 6 are hollow as well. The vane bearing 9 is ring shaped whereby one of its rings is attached to the hub 8 and the other ring is attached to the vane 6. In order that the vane bearing 9 and the main bearing 5 can reach a satisfactory service life span these bearings 9 must be well supported on the hub 8 so that its design must be stiff despite the large diameters of the main bearing 5 and the vane bearings 9. The diameters of these bearings can be 1.000 mm and higher for wind turbines whereof the diameter of the rotor R is more than 30 meter.

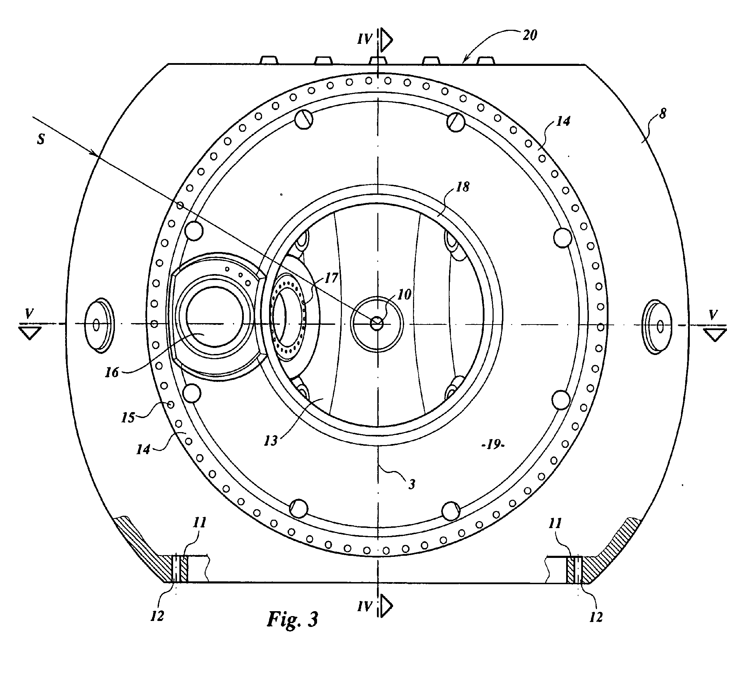

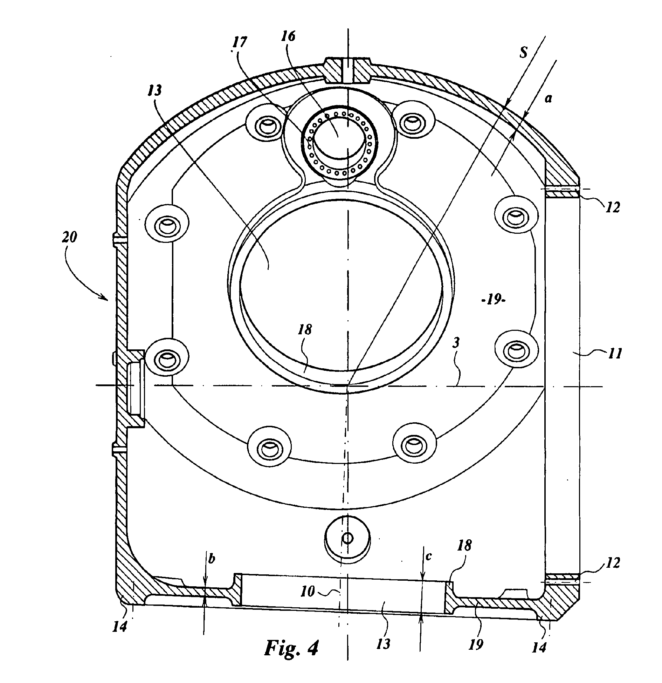

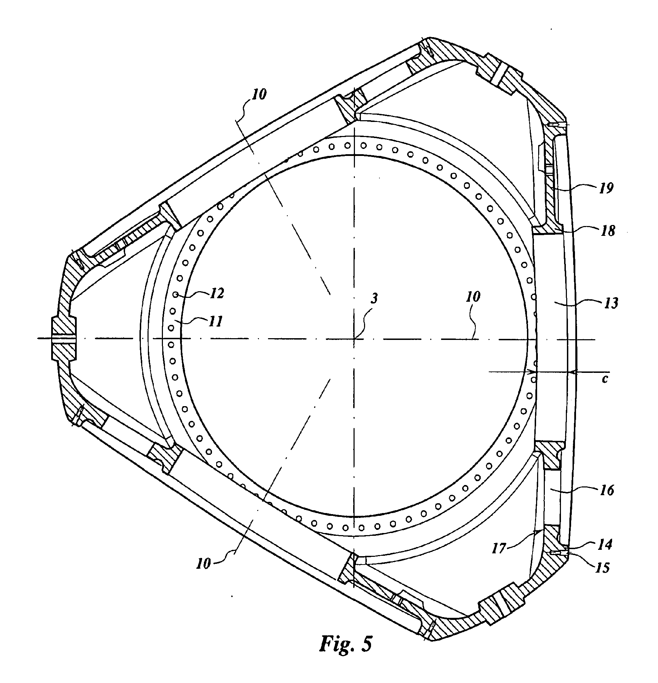

Figure 3 shows a side view of the hub 8. Figure 4 shows a section IV-IV of the hub 8 and figure 5 shows section V-V of the hub 8. The hub 8 has the shape of a hollow sphere with radius S and a wall thickness a. The sphere is oblate at the side of the main bearing 5. The main bearing 5 can be connected to a hub flange 11 using the holes 12. At the side opposite to the hub flange 11 the hollow sphere is also oblate and has there a front surface 20 with a diameter that is slightly less than the diameter of the hub flange 11 as the vane rotation axes 10 diverge slightly from the perpendicular on the rotor rotation axis 3. The cap 7 is attached to this front surface for obtaining the streamline shape. By having the front surface 20 that is parallel to the hub flange 11, the dimensions of the hub 8 can be smaller, which makes producing and transporting the hub 8 easier. In other embodiments, the hub 8 can have a hollow body with a shape that differs from a sphere and is for instance polygon or partly cylindrical.

The hub 8 has three vane flanges 14 with vane mounting holes 15 for fastening the vane bearing 9 to the hub 8. For reinforcing the hub 8 and the vane flange 14 at the inner circumference of each vane flange 14 a reinforcement ring 19 is connected to the vane flange 14 in a more or less flat plane at its inner circumference. For making the access to the inside of a vane 6 possible, the reinforcement ring 19 has a circular access opening 13. The access opening 13 has a diameter that is sufficient for accessing the inside of the vane 6 either by entering into the vane 6 or for extending arms and/or tools into the vane 6. The diameter of the access opening 13 is preferably between 0,4 to 0,6 times the inner diameter of the vane flange 14.

The reinforcement ring 19 has a ring wall thickness b, the ring wall thickness b can be less than the hub wall thickness a but is limited by the production method of the hub 8. The hub 8 generally is a metal part of large dimensions that is cast as one hollow part. In order to ensure that the cast has a continuous quality the ring wall thickness b of the reinforcement ring 19 is preferably not less than 50% of the hub wall thickness a. For saving material and weight, the reinforcement ring 19 is as thin as possible and for giving sufficient stiffness the reinforcement ring 19 has a stiffener rim 18 at its inner circumference. The stiffener rim 18 is a cylindrical ring and has a thickness that is substantially equal to the flange wall thickness b. In order to obtain sufficient stiffness the stiffener rim 18 has a rim height c that is at least twice and preferably three times the ring wall thickness b.

In the disclosed embodiment the vanes 6 can be set to a variable pitch by a pitch drive that acts on gear teeth on the inside diameter of the vane 6. The pitch drive is mounted on a drive flange 17. The drive flange 17 is part of the reinforcement ring 19 and has a drive opening 16 through which a pinion extends into the inside of the vane 6 where the pinion acts on the gear teeth.

## Claims

1. Hub for the rotor (R) of a wind turbine comprising a hollow body (8) with a first flange (11) for connecting the hollow body via a main bearing (5) to a housing (2) and several second flanges (14) for supporting vane bearings (9) that connect a vane (6) to the hollow body whereby the second flanges have on their inner diameter a reinforcement ring (19) in or near the planes of the second flange with its outside circumference attached to the second flange **characterized in that** the reinforcement ring (19) comprises at its inner circumference a cylindrical stiffener rim (18) with a thickness substantially equal to the thickness (b) of the reinforcement ring and the cylindrical stiffener rim (18) has a height (c) of at least twice and preferably three times the thickness (b) of the reinforcement ring (19).

2. Hub in accordance with claim 1 wherein the cylindrical stiffener rim (18) has an inner diameter of approximately 0,4 - 0,6 times the inner diameter of the second flange (14).

3. Hub in accordance with claim 1 or 2 wherein the hollow body (8) has an uninterrupted and substantially constant wall thickness (a) and whereby the thickness (b) of the reinforcement ring is not less than 50 % of the wall thickness of the hollow body.

4. Hub in accordance with one of the previous claims wherein a drive for the rotation of a vane (6) is mounted on the reinforcement ring (19).

5. Hub in accordance with one of the previous claims wherein between the first flange (11) and the second flanges (14) the hollow body (8) is spherical shaped and opposite the first flange the hollow body has a substantially flat surface (20) with a diameter equal to or slightly less than the diameter of the first flange

## Patentansprüche

1. Nabe für den Rotor (R) einer Windenergieanlage, die einen Hohlkörper (8) mit einem ersten Flansch (11) zum Verbinden des Hohlkörpers über ein Hauptlager (5) mit einem Gehäuse (2) und mehreren zweiten Flanschen (14) zum Stützen bzw. Tragen von Flügellagern (9) umfasst, die einen Flügel (6) mit dem Hohlkörper verbinden, wobei die zweiten Flansche auf ihrem Innendurchmesser einen Verstärkungsring (19) in oder in der Nähe der Ebene des zweiten Flansches aufweisen, wobei dessen äußerer Kreisumfang an dem zweiten Flansch befestigt ist,
**dadurch gekennzeichnet, dass**
der Verstärkungsring (19) an seinem inneren Kreisumfang einen zylinderförmigen Versteifungskranz (18) aufweist, dessen Dicke im Wesentlichen gleich der Dicke (b) des Verstärkungsrings ist, und
der zylinderförmige Versteifungskranz (18) eine Höhe (c) von mindestens zweimal und vorzugsweise dreimal der Dicke (b) des Verstärkungsringes (19) aufweist.

2. Nabe nach Anspruch 1, wobei der zylinderförmige Versteifungskranz (18) einen Innendurchmesser von ungefähr 0,4 - 0,6 mal dem Innendurchmesser des zweiten Flansches (14) aufweist.

3. Nabe nach Anspruch 1 oder 2, wobei der Hohlkörper (8) eine ununterbrochene und im Wesentlichen konstante Wanddicke (a) aufweist, und wobei die Dicke (b) des Verstärkungsrings nicht weniger als 50% der Wanddicke des Hohlkörpers beträgt.

4. Nabe nach einem der vorhergehenden Ansprüche, wobei ein Antrieb für die Rotation eines Flügels (6) auf dem Verstärkungsring (19) montiert ist.

5. Nabe nach einem der vorhergehenden Ansprüche, wobei zwischen dem ersten Flansch (11) und den zweiten Flanschen (14) der Hohlkörper (8) sphärisch geformt ist und der Hohlkörper gegenüber dem ersten Flansch eine im Wesentlichen flache Oberfläche (20) mit einem Durchmesser aufweist, der gleich oder etwas geringer ist als der Durchmesser des ersten Flansches.

## Revendications

1. Moyeu pour le rotor (R) d'une turbine éolienne comprenant un corps creux (8) avec une première bride (11) pour relier le corps creux, via un palier principal (5), à un carter (2) et plusieurs secondes brides (14) pour supporter des paliers d'aube (9) qui relient une aube (6) au corps creux, les secondes brides ayant sur leur diamètre intérieur une bague de renfort (19) dans ou près du plan de la seconde bride avec sa circonférence extérieure fixée à la seconde bride, **caractérisé en ce que** la bague de renfort (19) comprend sur sa circonférence intérieure un rebord raidisseur cylindrique (18) avec une épaisseur sensiblement égale à l'épaisseur (b) de la bague de renfort et le rebord raidisseur cylindrique (18) a une hauteur (c) égale à au moins deux fois et de préférence trois fois l'épaisseur (b) de la bague de renfort (19).

2. Moyeu selon la revendication 1 dans lequel le rebord raidisseur cylindrique (18) a un diamètre intérieur d'approximativement 0,4 à 0,6 fois le diamètre intérieur de la seconde bride (14).

3. Moyeu selon la revendication 1 ou 2 dans lequel le corps creux (8) a une épaisseur de paroi (a) ininterrompue et sensiblement constante et l'épaisseur (b) de la bague de renfort n'étant pas inférieure à 50 % de l'épaisseur de paroi du corps creux.

4. Moyeu selon l'une des revendications précédentes dans lequel un entraînement pour la rotation d'une aube (6) est monté sur la bague de renfort (19).

5. Moyeu selon l'une des revendications précédentes dans lequel entre la première bride (11) et les secondes brides (14), le corps creux (8) est de forme sphérique et à l'opposé de la première bride, le corps creux a une surface sensiblement plate (20) avec un diamètre égal ou légèrement inférieur au diamètre de la première bride.
